# EUROPEAN PATENT APPLICATION

(11) **EP 3 327 645 A1**
(43) Date of publication of application: **30.05.2018**
(21) Application number: 16827236.7
(22) Date of filing: 20.07.2016
(51) Int. Cl.: G06Q 20/00

(54) **INTELLIGENT PAYMENT APPARATUS AND METHOD UTILIZING COLOUR RECOGNITION AND CODING**

(30) Priority: 20.07.2015 US 201562194301 P; 03.12.2015 CN 201510877074
(71) Applicant: Coloryou Limited, Hong Kong (CN)
(72) Inventor: TIAN, Lili, Hong Kong (CN)
(74) Representative: Witte, Weller & Partner Patentanwälte mbB
(86) International application number: PCT/CN2016/090675
(87) International publication number: WO 2017/012545

(57) **Abstract**

Disclosed is a data transfer apparatus and method using color identification and coding, and an intelligent payment apparatus and method using the same. The intelligent payment apparatus using color recognition and coding, comprising a portable device and a receiving device, a first central processing unit and a chromatic display module being disposed in the portable device, and a color sensor, a color-to-code converter, a second central processing unit, and a multi-functional interface are disposed in the receiving device, wherein a signal output terminal of the first central processing unit is connected to the chromatic display module, the color sensor in the receiving device being capable of detecting colors displayed on the chromatic display module, a signal output terminal of the color sensor is connected to a signal input terminal of the color code converter, and a signal output terminal of the color code converter is connected to a signal input terminal of the second central processing unit. The intelligent payment apparatus using color recognition and code of the present invention has a good security and strong applicability and is easy and flexible to use. The payment method for an intelligent payment apparatus using color recognition and code of the present invention is easy to operate, convenient and practical.

## Description

### BACKGROUND

### Technical Field

The present invention relates to a data transfer method using color identification and coding and the apparatus thereof. In particular, the present further relates to an electronic payment method and apparatus based on a modification of the above method and apparatus.

### Related Art

In recent years, networks develop at a tremendous pace. In particular, online shopping, fee-paying, bank account operating, mobile payment, and the like are very popular and widely used. In recent years, mobile payment, including a technical approach for payment by means of swiping a mobile phone, has been under development by many companies from the retailing industry of primary economies. With an aim to provide consumers with the convenience on buying and for merchandises, the consumers will be able to shop or utilize transportations without carrying various types of payment cards and even their wallets. Mobile devices have become indispensable to modern people where an individual may have at least one or more mobile devices in possession, is therefore foreseeable that mobile payments will become increasingly popular. There are many methods of mobile payment via mobile phones, media used, and connections to a POS system, including but not limiting to using WiFi, Near Field Communication (NFC), two-dimensional code, sound wave, and light wave, for example, where the connection to the POS system is primarily in non-contact (or connection-free) form. The use of each of these transmission medium have both advantages and disadvantages. It would be appreciated that the advantages of using NFC are as follows: data can be rapidly transmitted and a transaction can be accomplished in less than one via non-contact data transfer. Furthermore, NFC can be used while offline. However, a is that the relevant services can only be started after a designated model of mobile phone with a dedicated service enabled SIM card installed. For that reason, the costs and requirements of using NFC is not low. Moreover, the relevant service generally allows connection with only one bank and somewhat inflexible. Therefore, banks and other payment service providers generally hold a attitude towards the use of NFC in mobile payment services. At the same time, NFC is prone to security issue where a third party may be able to tamper the data therein during data transmission.

The payment method using sound wave is achieved by generating, by a buzzer on a mobile phone, different frequencies as a medium of connection to a POS system. Similarly, it would be appreciated that the payment method using light wave pulse would imply the use of flashing of an LED light-compensating lamp on a mobile phone at different frequencies as a medium of connection to a POS, in which the advantages of the above methods are that no external connecting device is needed and are applicable in various types of mobile phones. The disadvantages of such methods of data transfer are that the transmission may be influenced by the surrounding, the speed of data transfer is relatively slow, the methods are not suitable for use offline, data transmission is only one-way, and data confidentiality is low.

### SUMMARY

An objective of the present invention is to provide an intelligent payment apparatus using color recognition and coding in consideration of the foregoing problems, where the intelligent payment apparatus has improved security and strong applicability which is easy and flexible to use.

Another objective of the present invention is to provide a payment method for an intelligent payment apparatus using color recognition and code, where the payment method is easy to operate, convenient and practical.

A technical solution of the present invention is as follows: an intelligent payment apparatus using color recognition and coding, comprising a portable device and a receiving device, a first central processing unit and a chromatic display module being disposed in the portable device, and a color sensor, a color-to-code converter, a second central processing unit, and a multi-functional interface are disposed in the receiving device, wherein a signal output terminal of the first central processing unit is connected to the chromatic display module, the color sensor in the receiving device being capable of detecting colors displayed on the chromatic display module, a signal output terminal of the color sensor is connected to a signal input terminal of the color code converter, and a signal output terminal of the color code converter is connected to a signal input terminal of the second central processing unit.

The present invention further provides a payment method for use with an intelligent payment apparatus, comprising the following steps:
1) a first central processing unit in a portable device converts, according to a predefined coding/protocol, payment information of an electronic virtual bank card or a mobile-phone wallet into a series of colorcodes associated with a series of colors and continuously displaying the colors on a chromatic display module in a sequence,
2) a color sensor in a receiving device detects a series of colors displayed on the display module and then a color-character converter converts the series of color into a series of colorcodes and then sending the series of colorcodes to a second central processing unit, and
3) the second central processing unit invokes, according to the predefined coding/protocol, a string of characters represented by the series of colorcodes, completing data transmission of the string characters in a connection-free manner, thereby realizing payment transaction.

Additionally, the present invention further provides a payment method for an intelligent payment apparatus, comprising the following steps:
1) a camera further disposed in a portable device, a full-color display module disposed in a receiving device, wherein the full-color display module in the receiving device displays a series of colors associated with a series of colorcodes according to a predefined coding/protocol,
2) the camera in the portable device takes shots of the series of colors displayed on the full-color display module and sends the photographed series of colors to a first central processing unit, and
3) the first central processing unit converts the received series of colors back to a series of colorcodes, then invokes a string of characters represented by the series of colorcodes according to the predefined coding/protocol, completing data transmission of the string of characters in a reverse direction and in a connection-free manner, thereby realizing payment transaction.

In the present invention, the method for color identification and coding is ingeniously used in a portable device to realize data transmission online, offline, or in a connection-free manner. For example, data transmission in payment by using a mobile phone, and can enable a portable apparatus (a smart phone, a tablet computer, a watch, or the like) having a chromatic display screen to become a mobile payment tool, which may be alternatively taken as a "mobile-phone wallet" or "mobile card holder", for two-way exchange of data with a receiving device, such as a POS machine. Using a visible part of light spectrum, or referred to as chromatogram, a colorcode can be indicated by RGB 24-bit or RGB 32-bit. By utilizing a predefined color coding (or protocol), wherein a designated colorcode represents a numeric digit or character. By using a first central processing unit in a portable device, a character is converted to a color according to coding/protocol predefined by a user, and displayed on a chromatic display module, for example, an LCD, by using a display driver module. The color displayed on the display module is detected by a color sensor in a receiving device on the opposite side and is converted back to a colorcode and then a character or digit by using a color-to-code converter and a second central processing unit in the receiving device. Then, a character represented by the colorcode is invoked according to the coding/protocol defined by the user, completing a "connection-free" data transfer of a single character or numeric digit. The present invention has advantages as follows:
1) The colorcodes of the present invention may form a series of colorcodes, which represents a string of digits or characters. During high-speed display of a display screen, a single colorcode may be displayed in 0.1 ms and thus the transmission speed may exceed 1000 characters per second.
2) The present invention is capable of achieving duplex (two-way) transmission of data. A receiving device and a portable device can be continuously used offline if the receiving device or the portable device fails in accessing a network, where the transfer operation is not influenced by network connection.
3) In the present invention, the colorcodes used in a portable device are expressed in forms of RGB24 and RGB32. According to a base of 16, colorcodes are expressed as #000000H to #FFFFFFH in form of RGB24 and #0000000H to #FFFFFFFH in form of RGB32. Theoretically, more than 16 million colors, i.e., more than 16 million colorcodes, may be generated. Thus, a user is provided with a large degree of freedom to define the coding relationships between colors and characters based on colorcodes.
4) Based on the large degree of freedom in defining the coding relationships, and the fact that a totally of 36 characters (i.e., A-Z and 0-9) are used, the above forms a second degree coding/protocol, similar to having two keys. Accordingly, user A and user B would define coding/protocol for colors according to their preferences. Due to the probability of having conflicting codes between the users is almost non-existent, the privacy of such transfer is greatly improved. In addition, for even better privacy the secondary degree coding/protocol may change over time, for example, in periods ranges from 1 minute to 4,320 minutes, or even randomly at any given time.
5) By using the portable device of the present invention, one-way data transmission can be used without the need of another external device or modification, as long as a display screen such as a chromatic LCD or OLED is incorporated in the portable device. Two-way duplex data transmission can be achieved in combination with a receiving device if the portable device also has a chromatic CMOS/CCD camera.
6) The use of the method for color identification and coding of the present invention in wireless data transmission may be an open platform, which does not need expensive coupling devices and systems. The invention is easy to master and flexible for any follow-on developments.
7) In the present invention, the colorcodes used in a portable device are expressed in forms of RGB24 and RGB32. According to a base of 16, colorcodes are expressed as #000000H to #FFFFFFH in form of RGB24 and #0000000H to #FFFFFFFH in form of RGB32. Theoretically, more than 16 million colors, i.e., more than 16 million colorcodes, may be generated. Thus in the process of defining colors in colorcodes, a user is provided with a large degree of freedom to define a security password. If higher security level is desired, the user may employ multiple coding/protocol definitions on the portable device which the portable device can be timely synchronized with an online system, minimizing the risk of data tampering.

In summary, as compared with the data transferring method using NFC, two-dimensional code, sound wave, and light wave, the present invention offers enhanced security, strong applicability and is easy yet flexible to be utilized. The intelligent payment apparatus using color identification and coding of the present invention offers enhanced security, strong applicability and is easy yet flexible to be utilized. Moreover, the payment method of the present invention is easy to operate, convenient and practical.

### BRIEF DESCRIPTION OF THE DRAWINGS

FIG. 1 is a schematic structural diagram of the present invention;
FIG. 2 is a diagram of connection between a portable device and a receiving device in practical use of the present invention;
FIG. 3 is a schematic diagram of a hardware constitution for a portable device of the present invention;
FIG. 4 is a schematic diagram of a hardware constitution for a receiving device of the present invention;

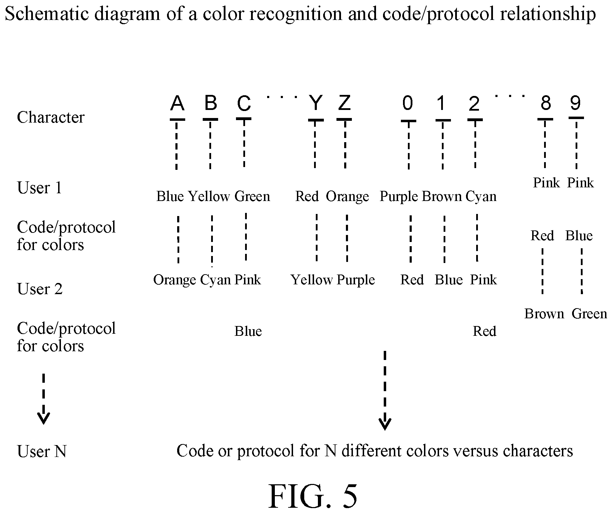

FIG. 5 is a schematic diagram of a color recognition and code/protocol relationship of the present invention; and

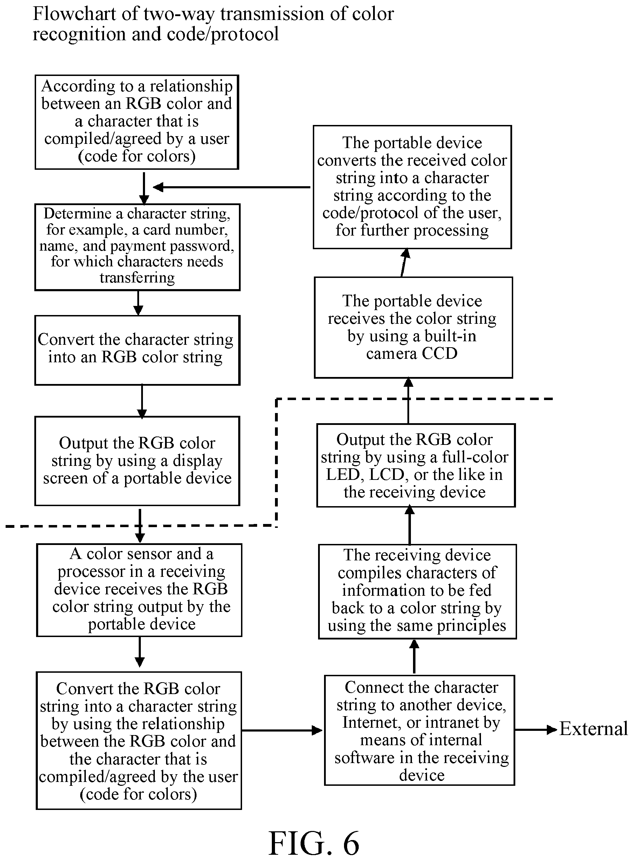

FIG. 6 is a flowchart of two-way transmission of color recognition and code/protocol of the present invention.

### DETAILED DESCRIPTION

Hereinafter, embodiments of the present invention will be described with reference to the accompanying drawings which have been provided for illustrative purposes and do not limit the present invention to the examples shown and described. In the following description, the same elements will be designated by the same reference numerals although they are shown in different drawings.

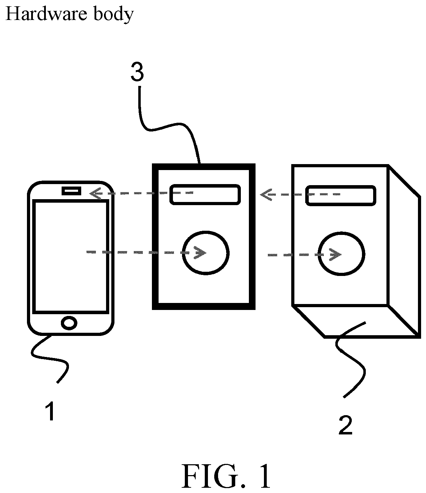

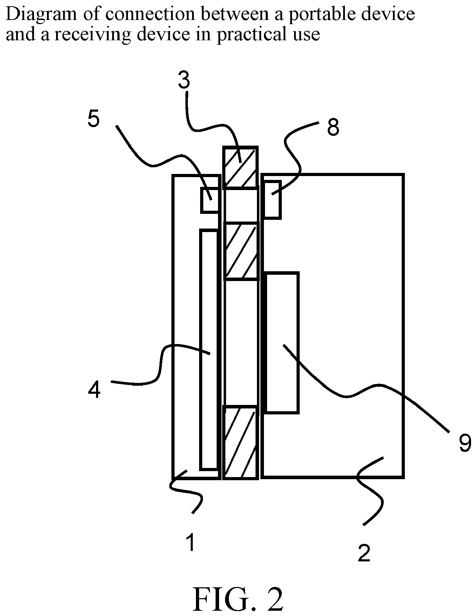

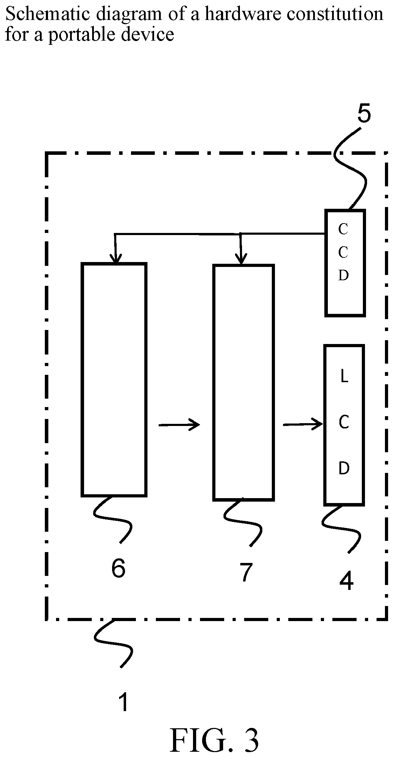

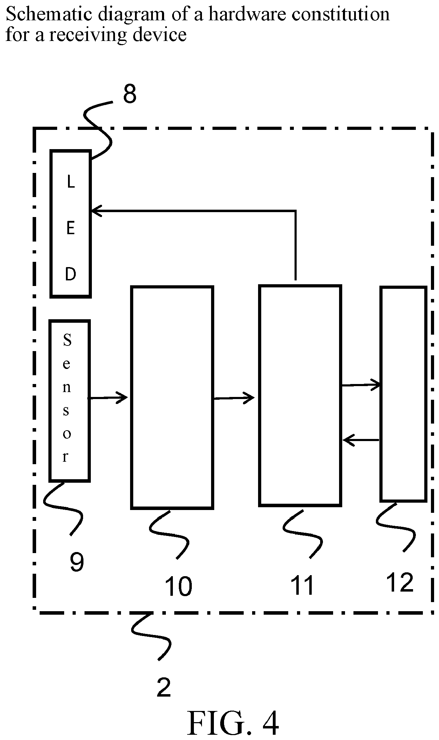

The schematic structural diagrams of the present invention are shown in FIG. 1, FIG. 2, FIG. 3, and FIG. 4. According to the present invention, the intelligent payment apparatus using color recognition and coding includes a portable device 1 and a receiving device 2. A first central processing unit 6, a display/image drive module 7, a chromatic display module 4, and a camera 5 are disposed in the portable device 1. A full-color display module 8, a color sensor 9, a color-to-code converter 10, a second central processing unit 11 and a multi-functional interface 12 are disposed in the receiving device 2. A signal output terminal of the first central processing unit 6 is connected to the display driver module 7, where the display driver drive module 7 is connected to the chromatic display module 4. The color sensor 9 in the receiving device 2 is capable of detecting a color displayed on the chromatic display module 4. A signal output terminal of the color sensor 9 is connected to a signal input terminal of the color-to-code converter 10. A signal output terminal of the color-to-code converter 10 is connected to a signal input terminal of the second central processing unit 11. The first central processing unit 6 in the portable device 1 displays on the chromatic display module 4 a color associated with a colorcode which corresponds to a character to be output according to a predefined coding/protocol. The color sensor 9 in the receiving device 2 detects the color displayed on the display module 4, the color-to-code converter 10 then converts the color into a colorcode and then transmits the colorcode to the second central processing unit 11. The second central processing unit 11 interprets the colorcode, according to the predefined coding/protocol, and outputs the character represented by the colorcode, to complete data transmission of one character in a "connection-free" manner.

The first central processing unit 6 in the above said portable device 1 may take a plurality of colors of different colorcodes and concatenate them into a series of colors. The series of colors is then continuously displayed in sequence on the chromatic display module 4 by using the display driver module 7. The colors displayed on the chromatic display module 4 are detected by the color sensor 9 in the receiving device 2 at the opposite terminal, and are converted back into a series of colorcodes by using the color-to-code converter 10, microprocessor 11 and memory in the receiving device 2. Then, the characters associated with the colorcodes according to the predefined coding/protocol are invoked one by one in sequence forming a concatenated string of characters. The coding and recognition of each character is accomplished within 0.1 ms to Is.

In the present embodiment, a camera 5 is further provided in the portable device 1 and a full-color display module 8 is disposed in the receiving device 2. The full-color display module 8 in the receiving device 2 serves to display a color associated with a colorcode according to the predefined coding/protocol. After the camera 5 in the portable device 1 takes a shot of the full-color display module 8 which displays a color, the first central processing unit 6 in the portable device 1 converts the perceived color back to the colorcode, and then invokes the character represented by the colorcode, according to the predefined coding/protocol, . This completes the data transfer of a character in a reverse direction in a "connection-free" manner.

In this embodiment, the display driver module 7 is connected between the first central processing unit 6 and the chromatic display module 4, whereas the first central processing unit 6 is connected to the chromatic display module 4 via the display driver module 7. The first central processing unit 6 displays a color associated with a colorcode on the chromatic display module 4 via the display driver module 7.

The plurality of different colorcodes may form a series of a colorcodes representing a string of digits or characters for continuous transmission. A duplex data transmission and communication is formed between the portable device 1 and the receiving device 2 by using a handshake protocol between the two devices and at the same time enhancing data security.

In this embodiment, the full-color display 8 on the receiving device 2 may be a trichromatic LED or a tetra-chromatic LED screen, or may also be a chromatic liquid-crystal display (LCD) screen, or an infrared LED screen. The chromatic display module 4 in the portable device 1 may be a full-color TFT LCD, an AMOLED, a QLCD, a trichromatic LED screen, or a tetra-chromatic LED screen. The color sensor 9 in the receiving device 2 may be a TCS3200, TCS3404, TCS34725, CCD, or a product of same type or based on same principle.

In this embodiment, the portable device 1 may be a smart mobile phone, a portable computer, a tablet computer, a smart watch, or the like that incorporates a chromatic display screen. The receiving device 2 may be a POS machine, a cash register, a portable computer, a smart mobile phone, a tablet computer, an entrance guard system, an ATM machine, or the like that incorporates a color sensor. It should be noted that one or more color sensors 9 may be used in the receiving device 2 to improve the sensing speed and precision. Further, a CMOS/CCD camera may be used in place of the color sensor.

In this embodiment, the RGB 24bit base 16 color spectrum that is used by the first central processing unit 6 in the portable device 1, the second central processing unit 11 and the color-to-code converter 10 in the receiving device 2 ranges from #000000H to #FFFFFFH whereas the range for RGB 32bit base 16 is from #00000000H to #FFFFFFFFH. The code adopts ASCII characters or 36 characters. That is, a secondary coding/protocol is formed by A-Z and 0-9. A secondary coding means a correlation between colorcode and a character can be edited according to different users and can be changed randomly over time.

The color-to-code converter 10 and the second central processing unit 11 in the receiving device 2 may simultaneously convert an output of the color sensor 9 into a frequency, current, voltage, RS232, RS485, I2C, or PWM signal, or the like, for subsequent processing.

In this embodiment, the receiving device 2 is provided with a soft dark-color cushion 3 with the functions of: 1) preventing collision and friction between the portable device 1 and the receiving device 2 during data exchange between the two devices; 2) preventing ambient light from influencing data transmission; and 3), improving privacy during connection between the two devices. The thickness of the soft cushion is between 1 mm and 50 mm. The soft dark-color cushion 3 may be made of materials such as a foam made from PU, PVC, PP, sponge, silica gel, and rubber. There are two openings provided on the soft dark-color cushion 3. Each opening may cover an area of 10 square millimeters to 500 square millimeters and is used as a passageway for the chromatic display module 4, the camera 5, the full-color display 8, or the color sensor 9.

In this embodiment, the plurality of different colorcodes may form a series of colorcode, which represents a string of digits, characters, or ASCII codes. The string of digits or characters is processed by the second central processing unit 11 in the receiving device 2 connected to an external device via the multi-functional interface 12 to exchange data. The interface 12 may be USB, HDMI, RS485, RS232, Ethernet, optical fiber, or the like.

In the present embodiment, a payment method for an intelligent payment apparatus using color recognition and coding of the present invention includes the following steps:
1) A first central processing unit 6 in a portable device 1 converts, according to predefined coding/protocol, payment information of an electronic virtual bank card or a mobile-phone wallet into a series of colorcodes and continuously displays the colors on a chromatic display module 4 in sequence. A display driver module 7 may be further disposed between the first central processing unit 6 and the chromatic display module 4, whereas the first central processing unit 6 is connected to the chromatic display module 4 via the display driver module 7. The first central processing unit 6 displays a color associated with a colorcode on the chromatic display module 4 via the display driver module 7.
2) A color sensor 9 in a receiving device 2 detects a series of colors being displayed on the display module 4 and a color-to-code converter 10 converts the series of colors into a series of colorcodes, then sends the series of colorcodes to a second central processing unit 11.
3) The second central processing unit 11 then invokes the string of characters represented by the series of colorcodes, according to the predefined coding/protocol. This completes the data transfer of a string of characters in a connection-free manner.

In addition, the payment method for the intelligent payment apparatus using the color recognition and coding of the present invention may further include the following steps:
1) A camera 5 is further disposed in a portable device 1, a full-color display module 8 is further disposed in a receiving device 2, and the full-color display module 8 in the receiving device 2 displays a sequence of colors associated with a series of colorcodes according to the predefined coding/protocol.
2) The camera 5 in the portable device 1 takes shots of the series of colors being displayed on the full-color display module 8 and sends the photographed colors to a first central processing unit 6.
3) The first central processing unit 6 converts the received series of colors back to a series of colorcodes, and then invokes characters associated with the colorcodes according to the predefined coding/protocol, completing the data transmission of a string of characters in a reverse direction in a "connection free" manner, and thereby realizing payment transaction.

The electronic virtual bank card may be substituted by an electronic virtual member card, an electronic virtual shopping card, an electronic virtual entry card, or the like.

The embodiments of the invention described above are exemplary only and are not intended to be limiting. One skilled in the art will recognize various modifications to the embodiments disclosed that are intended to be within the scope and spirit of the present disclosure. As such, the invention is limited only by the scope of the following claims.

## Claims

1. An apparatus that uses color coding to exchange data, comprising a portable device (1) and a receiving device (2), a first central processing unit (6) and a chromatic display module (4) being disposed in the portable device (1), and a color sensor (9), a color-to-code converter (10), a second central processing unit (11), and a multi-functional interface (12) are disposed in the receiving device (2), wherein a signal output terminal of the first central processing unit (6) is connected to the chromatic display module (4), the color sensor (9) in the receiving device (2) being capable of detecting colors displayed on the chromatic display module (4), a signal output terminal of the color sensor (9) is connected to a signal input terminal of the color code converter (10), and a signal output terminal of the color code converter (10) is connected to a signal input terminal of the second central processing unit (11).

2. The apparatus according to claim 1, wherein a camera (5) is further disposed in the portable device (1), a full-color display module (8) is disposed in the receiving device (2), the full-color display module (8) in the receiving device (2) displays a color of a colorcode for which code/protocol has been provided, the camera (5) in the portable device (1) takes shot of the color displayed on the full-color display (8), then the first central processing unit (6) in the portable device (1) converts the received color back to colorcode and then invokes a character represented by the colorcode according to a predefined coding/protocol, completing data transfer of one character in a reverse direction in a connection free manner; or, the camera (5) and the full-color display module (8) perform data transmission by means of a light flash frequency.

3. The apparatus according to claim 1, wherein a display driver module (7) is further disposed between the first central processing unit (6) and the chromatic display module (4), and the first central processing unit (6) is connected to the display module (4) via the display driver module (7), wherein a signal output terminal of the first central processing unit (6) is connected to the display drive module (7), which is connected to the chromatic display module (4); and through the display driver module (7), the first central processing unit 6 displays a color of a colorcode to be output on the chromatic display module (4) by using the display driver module (7).

4. The apparatus according to claim 1, wherein the full-color display module (8) in the receiving device (2) is a trichromatic LED display or a tetra-chromatic LED display, or is an LCD using a chromatic liquid-crystal display module, or an infrared LED screen; and the chromatic display module (4) in the portable device (1) may be a full-color TFT LCD, AMOLED screen, QLCD screen, trichromatic LED screen, or tetra-chromatic LED screen.

5. The apparatus according to claim 1, wherein the portable device (1) is a smart mobile phone, a portable computer, a tablet computer, or a smart watch that incorporates a chromatic display screen; the receiving device (2) is a POS machine, a cash register, a portable computer, a smart mobile phone, a tablet computer, an entrance guard system, an ATM machine, or the Internet that incorporates a color sensor; and one or more color sensors (9) are disposed in the receiving device (2).

6. The apparatus according to claim 5, wherein the one or more color sensors (9) are CCD or CMOS sensors.

7. The apparatus according to any one of claims 1 to 6, wherein a color spectrum that is used by the first central processing unit (6) in the portable device (1) and by the second central processing unit (11) and the color-to-code converter (10) in the receiving device (2) ranges from #000000H to #FFFFFFH when being expressed in RGB 24-bit with base 16, from #00000000H to #FFFFFFFFH when being expressed in RGB 32-bit base 16, and the colorcodes adopt ASCII characters or 36 characters, that is, a second degree coding/protocol is formed by A-Z and 0-9, wherein a second degree code is a correlation between a colorcode and a character which changes over time or randomly, and wherein the colorcode or colorcodes is/are predefined to represent a character, and the predefining and detecting of the colorcodes involves the adjustments of hue, saturation and brightness.

8. The apparatus according to claim 2, wherein the receiving device (2) is provided with a soft dark-color cushion (3), the soft dark-color cushion (3) is a foam made of PU, PVC, PP, sponge, silica gel, or rubber; and two openings are provided on the soft dark-color cushion (3), and each opening is used as a passageway for the chromatic display module (4), the camera (5), the full-color display module (8), or the color sensor (9).

9. The apparatus according to claim 7, wherein the plurality of different colorcodes forms a series of colorcodes, which represents a string of digits, characters, ASCII codes, or entire content in an electronic virtual bank card, and the string of digits or characters is processed by the second central processing unit (11) in the receiving device (2) and is then connected to an external device via the multi-functional interface (12) to exchange data; and the interface is a USB, HDMI, RS485, RS232, Ethernet, or optical fiber port.

10. A payment method for an apparatus that uses color coding to exchange data, comprising the following steps:
1) a first central processing unit (6) in a portable device (1) converts, according to a predefined coding/protocol, payment information of an electronic virtual bank card or a mobile-phone wallet into a series of colorcodes associated with a series of colors and continuously displaying the colors on a chromatic display module (4) in a sequence,
2) a color sensor (9) in a receiving device (2) detects a series of colors displayed on the display module (4) and then a color-character converter 10 converts the series of color into a series of colorcodes and then sending the series of colorcodes to a second central processing unit (11); and
3) the second central processing unit (11) invokes, according to the predefined coding/protocol, a string of characters represented by the series of colorcodes, completing data transmission of the string characters in a connection-free manner, thereby realizing payment transaction.
